# EUROPEAN PATENT APPLICATION

(11) **EP 4 738 083 A1**
(43) Date of publication of application: **06.05.2026**
(21) Application number: 24911389.5
(22) Date of filing: 27.12.2024
(51) Int. Cl.: G06F 3/04817

(54) **DISPLAY METHOD AND ELECTRONIC DEVICE**

(30) Priority: 28.12.2023 CN 202311852655
(71) Applicant: Huawei Technologies Co., Ltd., Shenzhen, Guangdong 518129 (CN)
(72) Inventor: WANG, Jinfeng, Shenzhen, Guangdong 518129 (CN); CHENG, Lv, Shenzhen, Guangdong 518129 (CN); WU, Keming, Shenzhen, Guangdong 518129 (CN)
(74) Representative: Isarpatent
(86) International application number: PCT/CN2024/142955
(87) International publication number: WO 2025/140468

(57) **Abstract**

A display method and an electronic device are provided. The electronic device includes a power-on detection unit (205), a main chip (202), a first control unit, a display power supply (207), a display driver chip (208), and a display panel (210). The first control unit is configured to perform initialization when receiving a first signal sent by the power-on detection unit (205) (S301), where the first signal indicates the electronic device to power on. The main chip (202) is configured to perform initialization when receiving a second signal sent by the power-on detection unit (205) or the first control unit (S302). The first control unit is configured to send a third signal to the display power supply (207) when the initialization is completed (S303). The first control unit is configured to send a fourth signal to the display driver chip (208) when the initialization is completed (S304), where the fourth signal is used to trigger the display panel (210) to display a first icon. In this application, a delay in displaying an icon after power-on can be reduced, waiting time and anxiety of a user can be reduced, and a power-on status of an electronic device can be indicated to the user in a timely manner, thereby preventing the user from performing another power-on operation redundantly, and improving user experience.

## Description

This application claims priority to Chinese Patent Application No. 202311852655.7, filed with the China National Intellectual Property Administration on December 28, 2023 and entitled "DISPLAY METHOD AND ELECTRONIC DEVICE", which is incorporated herein by reference in its entirety.

### TECHNICAL FIELD

This application relates to the field of computer technologies, and in particular, to a display method and an electronic device.

### BACKGROUND

Currently, after receiving a power-on operation of a user, an electronic device may power on, and display an icon on a display to indicate to the user that the electronic device has powered on. However, time from the electronic device receiving the power-on operation to displaying the icon on the display is 3 seconds or even longer. During this period, it is difficult for the user to perceive whether the electronic device has powered on, and consequently, the user may perform an invalid power-on operation, for example, pressing a power button again, resulting in poor user experience.

### SUMMARY

This application discloses a display method and an electronic device, to reduce a delay in displaying an icon after power-on, reduce waiting time and anxiety of a user, indicate a power-on status of the electronic device to the user in a timely manner, prevent the user from performing another power-on operation redundantly, and improve user experience.

According to a first aspect, an embodiment of this application provides an electronic device, including a power-on detection unit, a main chip, a first control unit, and a display module. The display module includes a display power supply, a display driver chip, and a display panel. The first control unit is configured to perform initialization when receiving a first signal sent by the power-on detection unit, where the first signal indicates the electronic device to start power-on. The main chip is configured to perform initialization when receiving a second signal sent by the power-on detection unit or the first control unit. The first control unit is configured to send a third signal to the display power supply when the initialization is completed, where the third signal is used to enable the display power supply. The first control unit is configured to send a fourth signal to the display driver chip when the initialization is completed, where the fourth signal is used to trigger the display panel to display a first icon, and the first icon is an icon stored in the display module.

In the foregoing electronic device, the first control unit is added to the electronic device, so that after receiving the first signal, the electronic device does not need to wait for completion of the initialization of the main chip before displaying the icon (after the initialization of the first control unit is completed), but before the initialization of the main chip is completed, the electronic device may control, by using the first control unit, the display module to be powered on and complete initialization, so as to display the first icon. The electronic device decouples the initialization of the display module from the initialization of the main chip, so that time for independent initialization of the first control unit is shorter, thereby reducing a delay in displaying the icon after power-on, reducing waiting time and anxiety of a user, preventing the user from performing another power-on operation redundantly, and improving user experience.

In a possible implementation, first duration for the initialization of the first control unit is less than second duration for the initialization of the main chip.

In the foregoing electronic device, because the first duration (generally less than 1 second) required for the initialization of the first control unit is less than the second duration (generally greater than or equal to 2 seconds) required for the initialization of the main chip, a delay in displaying the icon after power-on is reduced, and the user can determine whether the electronic device has powered on without waiting for a relatively long time, thereby preventing the user from performing another power-on operation redundantly, and improving user experience.

In a possible implementation, the first control unit is configured to send the second signal to the main chip when receiving the first signal sent by the power-on detection unit; and the main chip is configured to perform the initialization when receiving the second signal sent by the first control unit.

In a possible implementation, the first control unit includes a system control unit and an icon display control unit. The system control unit is configured to: when receiving the first signal sent by the power-on detection unit, send an enable signal to the icon display control unit, and send the second signal to the main chip. The icon display control unit is configured to perform initialization when receiving the enable signal, where duration for the initialization of the icon display control unit is less than the second duration for the initialization of the main chip. The main chip is configured to perform the initialization when receiving the second signal sent by the system control unit.

In the foregoing electronic device, the electronic device integrates the system control unit and the icon display control unit into the first control unit, so that components of the electronic device are simplified, and costs of the electronic device are reduced. In addition, the duration for the initialization of the icon display control unit is less than the second duration for the initialization of the main chip. Therefore, the icon can be displayed without waiting for completion of the initialization of the main chip, thereby reducing a delay in displaying the icon after power-on, and improving user experience.

In a possible implementation, the system control unit and the icon display control unit are integrated as a whole.

In the foregoing electronic device, the electronic device may integrate the system control unit and the icon display control unit as a whole in the electronic device. In this way, components of the electronic device are simplified, and costs of the electronic device are reduced.

In a possible implementation, the electronic device includes an OR gate, the first control unit, the main chip, and the display power supply are connected through the OR gate. The first control unit is configured to send the third signal to the OR gate when the initialization is completed; and the OR gate is configured to send the received third signal to the display power supply.

In the foregoing electronic device, the OR gate is added to the electronic device for connection to the first control unit, the main chip, and the display power supply, so that the first control unit can independently supply power to the display power supply, and an original structure of the electronic device is not changed (for example, the main chip supplies power to the display power supply), thereby reducing costs of redesigning and assembling the electronic device.

In a possible implementation, the main chip is configured to send a second icon to the display driver chip when the initialization is completed, where the second icon is an icon stored in a memory of the main chip. The main chip is configured to send a first message to the first control unit, where the first message indicates that the main chip sends the second icon to the display driver chip. The first control unit is configured to send a fifth signal to the display driver chip based on the first message, where the fifth signal is used to trigger the display panel to display the second icon.

In the foregoing electronic device, when the initialization of the main chip is completed, the main chip may send the second icon to the display panel by using the display driver chip, so that the display panel switches the displayed first icon to the second icon. The first icon and the second icon may be different, so that a use requirement for displaying a plurality of icons can be met, and user experience can be further improved.

In a possible implementation, the electronic device includes the OR gate, the first control unit, the main chip, and the display power supply are connected through the OR gate. The main chip is configured to send a sixth signal to the OR gate when the initialization is completed, where the sixth signal is used to enable the display power supply. The first control unit is configured to send a seventh signal to the OR gate based on the first message, where the seventh signal is used to disable the display power supply. The OR gate is configured to send an eighth signal to the display power supply based on the sixth signal and the seventh signal, where the eighth signal is a signal obtained through an OR operation performed on the sixth signal and the seventh signal, and the eighth signal is used to enable the display power supply.

In the foregoing electronic device, the OR gate is added to the electronic device for connection to the first control unit, the main chip, and the display power supply, so that the first control unit and the main chip may jointly control enabling of the display power supply.

In a possible implementation, the fourth signal is different from the fifth signal, the fourth signal is a signal in a first state, the fifth signal is a signal in a second state, and the first state and the second state are different states of signals used to trigger display of icons.

In the foregoing electronic device, the fourth signal may be an icon enable signal in an enabled state, the fifth signal may be an icon enable signal in a disabled state, the first state may be an enabled state, and the second state may be a disabled state. The electronic device can flexibly control switching between the first icon and the second icon by controlling different states (the enabled state and the disabled state) of the icon enable signals. A delay in switching between the two states of the icon enable signals is relatively low. Therefore, a rate of switching between the first icon and the second icon is relatively high, and the user is unaware of the switching, thereby further improving user experience.

In a possible implementation, the sixth signal is different from the seventh signal, the sixth signal is a signal in a third state, the seventh signal is a signal in a fourth state, and the third state and the fourth state are different states of signals used to enable the display power supply.

In the foregoing electronic device, the sixth signal is the same as the third signal, both the sixth signal and the third signal may be a power enable signal in an enabled state, the seventh signal may be a power enable signal in a disabled state, the third state may be an enabled state, and the fourth state may be a disabled state. The electronic device can flexibly switch, by controlling different states (the enabled state and the disabled state) of the power enable signals, a power supply body (the main chip or the first control unit) that supplies power to the display power supply, so that only one power supply body may supply power to the display power supply at a same moment, thereby reducing power consumption of the electronic device.

In a possible implementation, the second duration for the initialization of the main chip is greater than third duration, and the third duration is a sum of duration for initialization of the display module and the first duration for the initialization of the first control unit.

In the foregoing electronic device, the duration for the initialization of the main chip may be further greater than the sum of the duration for the initialization of the first control unit and the duration for the initialization of the display module (including the display power supply, the display driver chip, the display panel, and the memory). In other words, the main chip may complete the initialization only when the display module completes the initialization and displays the first icon. Therefore, a delay in displaying the icon after power-on is greatly reduced, and user experience is further improved.

According to a second aspect, an embodiment of this application provides a display method, applied to an electronic device. The electronic device includes a power-on detection unit, a main chip, a first control unit, and a display module, the display module includes a display power supply, a display driver chip, and a display panel, and the method includes: The first control unit performs initialization when the first control unit receives a first signal sent by the power-on detection unit, where the first signal indicates the electronic device to start power-on; the main chip performs initialization when the main chip receives a second signal sent by the power-on detection unit or the first control unit; the first control unit sends a third signal to the display power supply when the initialization of the first control unit is completed, where the third signal is used to enable the display power supply; and the first control unit sends a fourth signal to the display driver chip when the initialization of the first control unit is completed, where the fourth signal is used to trigger the display panel to display a first icon, and the first icon is an icon stored in the display module.

In a possible implementation, first duration for the initialization of the first control unit is less than second duration for the initialization of the main chip.

In a possible implementation, the method further includes: The first control unit sends the second signal to the main chip when the first control unit receives the first signal sent by the power-on detection unit; and the main chip performs the initialization when the main chip receives the second signal sent by the first control unit.

In a possible implementation, the first control unit includes a system control unit and an icon display control unit, and the method further includes: When the system control unit receives the first signal sent by the power-on detection unit, the system control unit sends an enable signal to the icon display control unit, and the system control unit sends the second signal to the main chip; the icon display control unit performs initialization when the icon display control unit receives the enable signal, where duration for the initialization of the icon display control unit is less than the second duration for the initialization of the main chip; and the main chip performs the initialization when the main chip receives the second signal sent by the system control unit.

In a possible implementation, the system control unit and the icon display control unit are integrated as a whole.

In a possible implementation, the electronic device includes an OR gate, the first control unit, the main chip, and the display power supply are connected through the OR gate, and the method further includes: The first control unit sends a third signal to the OR gate when the initialization of the first control unit is completed; and the OR gate sends the received third signal to the display power supply.

In a possible implementation, the method further includes: The main chip sends a second icon to the display driver chip when the initialization of the main chip is completed, where the second icon is an icon stored in a memory of the main chip; the main chip sends a first message to the first control unit, where the first message indicates that the main chip sends the second icon to the display driver chip; and the first control unit sends a fifth signal to the display driver chip based on the first message, where the fifth signal is used to trigger the display panel to display the second icon.

In a possible implementation, the electronic device includes the OR gate, the first control unit, the main chip, and the display power supply are connected through the OR gate, and the method further includes: The main chip sends a sixth signal to the OR gate when the initialization of the main chip is completed, where the sixth signal is used to enable the display power supply; the first control unit sends a seventh signal to the OR gate based on the first message, where the seventh signal is used to disable the display power supply; and the OR gate sends an eighth signal to the display power supply based on the sixth signal and the seventh signal, where the eighth signal is a signal obtained through an OR operation performed on the sixth signal and the seventh signal, and the eighth signal is used to enable the display power supply.

In a possible implementation, the fourth signal is different from the fifth signal, the fourth signal is a signal in a first state, the fifth signal is a signal in a second state, and the first state and the second state are different states of signals used to trigger display of icons.

In a possible implementation, the sixth signal is different from the seventh signal, the sixth signal is a signal in a third state, the seventh signal is a signal in a fourth state, and the third state and the fourth state are different states of signals used to enable the display power supply.

In a possible implementation, the second duration for the initialization of the main chip is greater than third duration, and the third duration is a sum of duration for initialization of the display module and the first duration for the initialization of the first control unit.

For technical effects brought by the second aspect or the possible implementations, refer to descriptions of technical effects of the first aspect or the corresponding implementations.

According to a third aspect, this application provides an electronic device, including a transceiver, a processor, and a memory. The memory is configured to store a computer program, and the processor invokes the computer program to perform the display method in any possible implementation of the second aspect.

According to a fourth aspect, this application provides an electronic device, including one or more processors and one or more memories. The one or more memories are coupled to the one or more processors. The one or more memories are configured to store computer program code. The computer program code includes computer instructions, and when the one or more processors execute the computer instructions, the electronic device is enabled to perform the display method in any possible implementation of the second aspect.

According to a fifth aspect, this application provides a computer storage medium. The computer storage medium stores a computer program, and when the computer program is executed by a processor, the display method in any possible implementation of the second aspect is performed.

According to a sixth aspect, this application provides a computer program product. When the computer program product runs on an electronic device, the electronic device is enabled to perform the display method in any possible implementation of the second aspect.

According to a seventh aspect, this application provides an electronic device. The electronic device includes the method or the apparatus described in any implementation of the first aspect or the second aspect of this application. The electronic device is, for example, a chip.

It should be understood that descriptions of technical features, technical solutions, beneficial effects, or similar languages in this application do not imply that all features and advantages can be implemented in any single implementation. On the contrary, it may be understood that descriptions of features or beneficial effects mean that at least one implementation includes specific technical features, technical solutions, or beneficial effects. Therefore, descriptions of technical features, technical solutions, or beneficial effects in this specification do not necessarily refer to a same implementation. Further, the technical features, technical solutions, and beneficial effects described in implementations may be combined in any appropriate manner. Persons skilled in the art may understand that implementations may be implemented without one or more specific technical features or technical solutions, or beneficial effect in a specific implementation. In other implementations, additional technical features and beneficial effects may also be identified in specific implementations that do not reflect all implementations.

### BRIEF DESCRIPTION OF DRAWINGS

The following describes accompanying drawings used in this application.
FIG. 1 is a diagram of a hardware structure of an electronic device according to this application;
FIG. 2 is a diagram of a hardware structure of an electronic device 100 according to this application;
FIG. 3 is a diagram of another hardware structure of an electronic device 100 according to this application;
FIG. 4 is a diagram of still another hardware structure of an electronic device 100 according to this application;
FIG. 5 is a diagram of still yet another hardware structure of an electronic device 100 according to this application;
FIG. 6A to FIG. 6C are a schematic flowchart of a display method according to this application;
FIG. 7A and FIG. 7B are a schematic flowchart of another display method according to this application; and
FIG. 8 is a schematic flowchart of still another display method according to this application.

### DESCRIPTION OF EMBODIMENTS

The following describes technical solutions of embodiments in this application with reference to accompanying drawings. In descriptions of embodiments of this application, unless otherwise stated, "/" indicates "or". For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, in descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In descriptions of embodiments of this application, unless otherwise specified, "a plurality of" means two or more.

Currently, after an electronic device starts power-on, a user may be indicated to in the following two manners:
Manner 1: When the electronic device is configured with a power indicator or a keyboard indicator (for example, including but not limited to a keyboard backlight and a keyboard special key), after receiving a power-on operation of the user, the electronic device may turn on the power indicator or the keyboard indicator to indicate to the user that the electronic device has powered on, where the power-on operation may be pressing a power button, or may be another operation (for example, flipping a cover). In this manner, time from receiving the power-on operation to turning on the power indicator or the keyboard indicator is relatively short (generally less than 1 second). The user can perceive that the electronic device has powered on without waiting. However, effect of the power indicator or the keyboard indicator is not noticeable when illuminated in daylight, and the user needs to specially check to perceive that the indicator is on. It may be understood that effect of a power-on reminder is not obvious.
Manner 2: After receiving a power-on operation of the user, the electronic device may power on, and display an icon (for example, a trademark of the electronic device) on a display to indicate to the user that the electronic device has powered on. In this manner, time from receiving the power-on operation to displaying the icon on the display needs 3 seconds or even longer. It may be understood that a delay in displaying the icon after power-on is relatively long. During this period, it is difficult for the user to perceive whether the electronic device has powered on, and consequently, the user may perform another operation redundantly, for example, pressing a power button, resulting in poor user experience.

This application provides a method for quickly indicating to a user that power-on has been started, to prevent the user from performing another power-on operation redundantly.

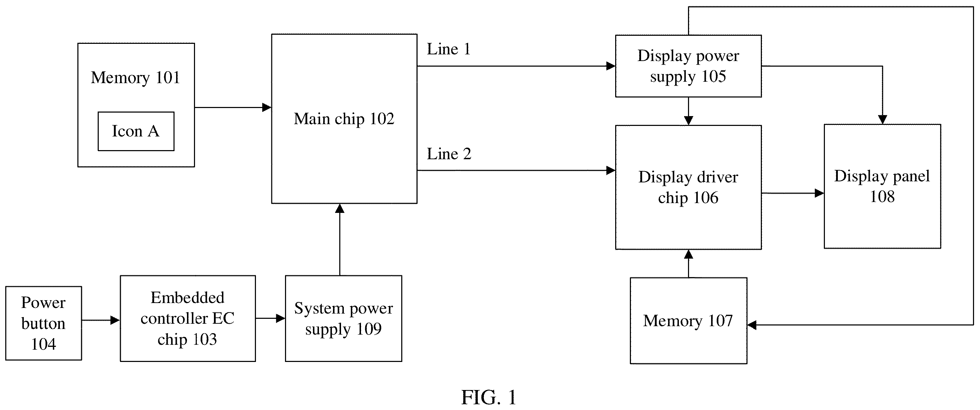

FIG. 1 is a diagram of an example of a hardware structure of an electronic device.

As shown in FIG. 1, the electronic device may include a memory 101 (including an icon A), a main chip 102, an embedded controller (Embedded Controller, EC) chip 103, a power button 104, a display power supply 105, a display driver chip 106, a memory 107, a display panel 108, and a system power supply 109. A circuit and a component on the main chip 102 may be connected to a circuit and a component on the display power supply 105 through a line 1, and a circuit and a component on the main chip 102 may be connected to a circuit and a component on the display driver chip 106 through a line 2. The line 2 is, for example, a video protocol transmission bus.

The power button 104 may be configured to receive a power-on operation of a user, for example, a pressing operation on the power button 104. The EC chip 103 may be configured to perform power management on the electronic device 100. The memory 101 may be configured to store firmware of the main chip 102, for example, information about an icon A. The display power supply 105 may be configured to supply power to the display driver chip 106, the memory 107, and the display panel 108. The memory 107 may be configured to store firmware of the display driver chip 106.

After receiving the power-on operation, the power button 104 may send a signal 1 to the EC chip 103. After receiving the signal 1, the EC chip 103 may control the system power supply 109 to supply power to the main chip 102. When the main chip 102 is powered on or is on, a series of operations may be performed to enable the main chip 102 to run normally (which may be referred to as initialization for short). After the main chip 102 is powered on and completes initialization, the main chip 102 may send a power enable signal (which may be referred to as a power signal 1) in an enabled state to the display power supply 105 through the line 1. The power signal 1 may be used to adjust the display power supply 105 to an enabled state, so that the display power supply 105 completes initialization. The initialized display power supply 105 may supply power to the display driver chip 106, the memory 107, and the display panel 108, so that the display driver chip 106, the memory 107, and the display panel 108 complete initialization. Then, the main chip 102 may send the icon A in the memory 101 to the display driver chip 106 through the line 2, the display driver chip 106 may send the icon A to the display panel 108, and the display panel 108 displays the icon A.

In an implementation based on the hardware structure shown in FIG. 1, because time from the power button 104 receiving the power-on operation to the main chip 102 completing the initialization is relatively long, for example, time from the power button 104 receiving the power-on operation to the EC chip controlling the system power supply to power on the main chip 102 is about 1 second, and time required for the initialization of the main chip 102 after power-on is relatively long and is generally greater than or equal to 2 seconds. Consequently, a delay (generally greater than or equal to 3 seconds) in displaying the icon A on the display panel 108 is relatively long, and the user needs to wait for a relatively long time to determine whether the electronic device has powered on, resulting in poor user experience.

An embodiment of this application proposes a display method. The method is applied to an electronic device. In the method, an additional control logic circuit is added, so that after receiving a power-on operation, the electronic device does not need to wait for completion of initialization of a main chip before displaying an icon, but may control, by using the control logic circuit, a display module to be powered on and complete initialization before the initialization of the main chip is completed, so as to display the icon. Because time (usually less than 1 second) required for initialization of the control logic circuit is less than time (usually greater than or equal to 2 seconds) required for the initialization of the main chip, a delay in displaying the icon after power-on is reduced, and the user can determine, without waiting for a relatively long time, whether the electronic device has powered on. It may be understood that, the user can determine, based on the icon lighted on the display, that the electronic device is currently powered on after pressing the power button for about 1 second, but does not need to wait for 3 seconds or even longer to determine whether the electronic device is powered on after pressing the power button. In this manner, a problem of a relatively long delay in displaying an icon after power-on is resolved, and waiting time and anxiety of the user are reduced, thereby preventing the user from performing another power-on operation redundantly, and improving user experience.

In this application, the electronic device may be a smart home device like a mobile phone, a tablet computer, a handheld computer, a desktop computer, a laptop computer, an ultra-mobile personal computer (ultra-mobile personal computer, UMPC), a netbook, a cellular phone, a personal digital assistant (personal digital assistant, PDA), or a smart television, a wearable device like a smart band, a smart watch, or smart glasses, an extended reality (extended reality, XR) device like an augmented reality (augmented reality, AR) device, a virtual reality (virtual reality, VR) device, or a mixed reality (mixed reality, MR) device, a vehicle-mounted device, a smart city device, or the like. A specific type of the electronic device is not specifically limited in this application.

The following describes an example of an electronic device 100 in embodiments of this application.

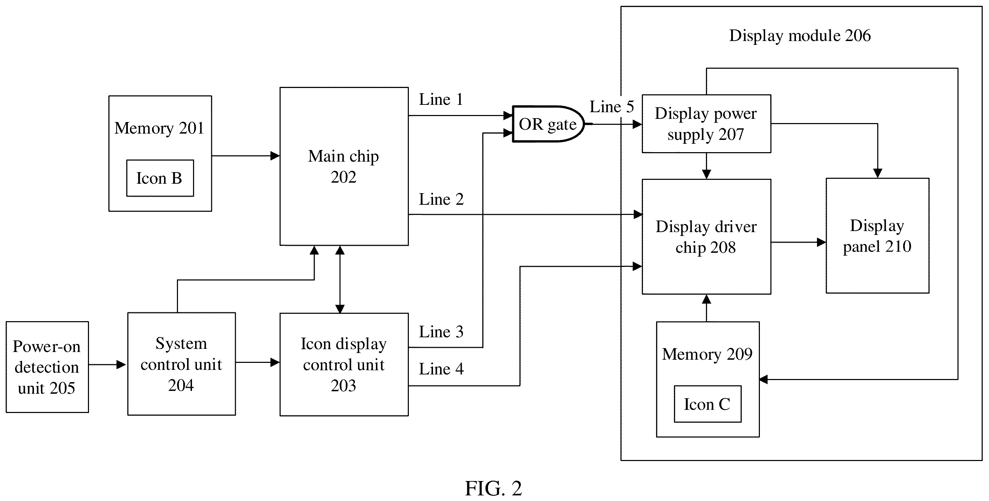

FIG. 2 is a diagram of an example of a hardware structure of an electronic device 100.

As shown in FIG. 2, the electronic device 100 may include a memory 201 (including an icon B), a main chip 202, an icon display control unit 203, a system control unit 204, a power-on detection unit 205, an OR gate, and a display module 206. The display module 206 may include a display power supply 207, a display driver chip 208, a memory 209 (including an icon C), and a display panel 210. The main chip 202, the icon display control unit 203, and the display power supply 207 may be connected through the OR gate. The main chip 202 and the OR gate may be connected through a line 1, the icon display control unit 203 and the OR gate may be connected through a line 3, and the OR gate and the display power supply 207 may be connected through a line 5. A circuit and a component on the main chip 202 may be connected to a circuit and a component on the display driver chip 208 through a line 2. A circuit and a component on the icon display control unit 203 may be connected to a circuit and a component on the display driver chip 208 through a line 4.

The main chip 202 may be configured to perform task calculation and management, graphics service processing, and the like. The main chip 202 is, for example, but is not limited to, an ARM architecture-based integrated system on chip (System-on-Chip, SOC) (which may be referred to as an ARM SOC for short), an MIPS (Microprocessor without interlocked piped stages) architecture-based SOC (which may be referred to as an MIPS SOC for short), or an Intel x86 architecture-based SOC (which may be referred to as an x86 SOC for short).

The memory 201 may be configured to store firmware of the main chip 202, for example, information about the icon B. The memory 201 is, for example, an input/output system-based nonvolatile memory (BIOS NOR Flash).

The system control unit 204 may be configured to control an external input device (for example, a keyboard or a mouse) of a system, a sensor, a power supply, and the like. The system control unit 204 may be configured to supply power to the icon display control unit 203, the main chip 202, and the memory 201. The system control unit 204 is, for example, but is not limited to, a microcontroller unit (Microcontroller Unit, MCU), an embedded controller (Embedded Controller, EC), and a chip integrated an MCU and a power supply.

The icon display control unit 203 may be a single-chip microcomputer.

The power-on detection unit 205 may be configured to receive a power-on operation of the user, for example, a pressing operation of the user on a power button, or a cover flipping operation of the user on the electronic device 100 that is detected by using a Hall effect sensor.

The OR gate may be an OR logic digital gate circuit chip, or the OR gate may be integrated into the icon display control unit 203, or may exist independently.

The display power supply 207 may be configured to supply power to the display driver chip 106, the memory 107, and the display panel 108.

The display driver chip 208 may be configured to process received image data, and send processed image data to the display panel 210, so that the display panel 210 displays the image data. The display driver chip 208 may include at least one chip.

The memory 209 may be configured to store firmware of the display driver chip 208, for example, information about the icon C. The memory 209 is, for example, a timing controller-based nonvolatile memory (TCON NOR Flash).

The display panel 210 may be configured to output the image data. The display panel 210 is, for example, a liquid crystal display (Liquid Crystal Display, LCD) or an organic light-emitting diode (Organic Light-Emitting Diode, OLED).

After receiving the power-on operation, the power-on detection unit 205 may send a signal 2 to the system control unit 204. After receiving the signal 2, the system control unit 204 may supply power to the icon display control unit 203 and the main chip 202. When the icon display control unit 203 and the main chip 202 are powered on or are on, the icon display control unit 203 and the main chip 202 may perform separate initialization, where duration for the initialization of the main chip 202 is greater than duration for the initialization of the icon display control unit 203. When the icon display control unit 203 is powered on and completes the initialization, the icon display control unit 203 may send a power signal 1 to the display power supply 207 through the line 3. The power signal 1 is, for example, a high level. The power signal 1 may be used to adjust the display power supply 207 to an enabled state, so that the display power supply 207 completes initialization. The initialized display power supply 207 may supply power to the display driver chip 208, the memory 209, and the display panel 210 in the display module 206, so that the display driver chip 208, the memory 209, and the display panel 210 are powered on and complete initialization. In addition, the icon display control unit 203 may send an icon enable signal (which may be referred to as an icon signal 1) in an enabled state to the display driver chip 208 through the line 4. After the display driver chip 208 completes the initialization, when detecting the icon signal 1, the display driver chip 208 may send the icon C in the memory 209 to the display panel 210, and the display panel 210 displays the icon C. When the main chip 202 is powered on and completes the initialization, the main chip 202 may send a power signal 1 (for example, a high level) to the display power supply 207 through the line 1, and send the icon B in the memory 201 to the display driver chip 208 through the line 2. In an implementation, the main chip 202 may further send indication information to the icon display control unit 203, where the indication information indicates that the main chip 202 has sent the icon B to the display driver chip 208. After receiving the indication information, the icon display control unit 203 may send a power enable signal (which may be referred to as a power signal 2) in a disabled state to the display power supply 207 through the line 3, and send an icon enable signal (which may be referred to as an icon signal 2) in a disabled state to the display driver chip 208 through the line 4. It may be understood that the enabled state of the power enable signal is switched to the disabled state, and the enabled state of the icon enable signal is switched to the disabled state. After detecting the icon signal 2, the display driver chip 208 may send the icon B to the display panel 210, and the display panel 210 switches a displayed icon A to the icon B.

It may be understood that the diagram of the hardware structure of the electronic device 100 shown in FIG. 2 may include more or fewer modules. Any module in the diagram of the hardware structure may be a hardware module or a software module. The foregoing any module may be an independent module, or the foregoing at least one module may be integrated together. For example, the icon display control unit 203 may be integrated into the system control unit 204. For another example, the memory 201 may be integrated into the main chip 202, or the memory 209 may be integrated into the display driver chip 208, or the OR gate may be integrated into the icon display control unit 203. This is not limited in this application. A name of any one of the foregoing modules is not limited in this application, and may alternatively be another name, and is used to implement a function corresponding to the any one of the foregoing modules.

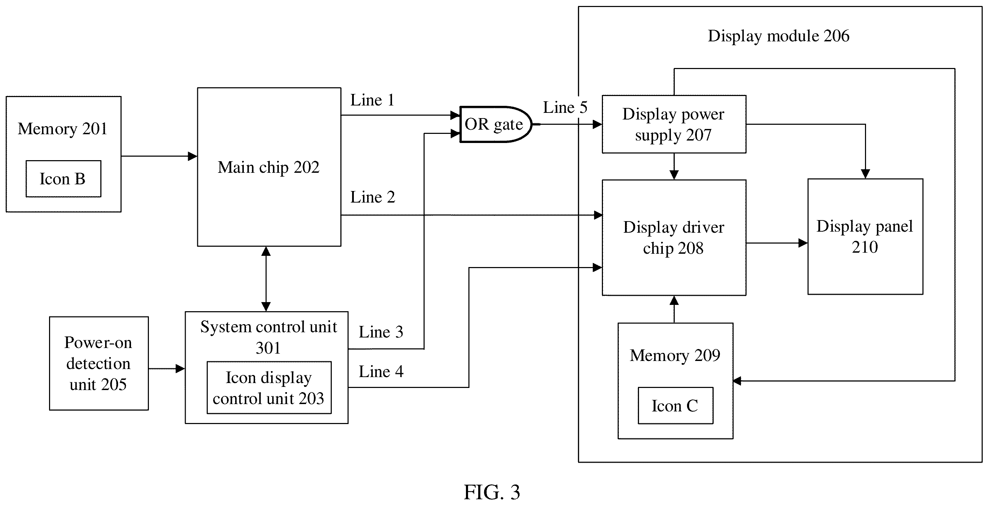

FIG. 3 is a diagram of an example of another hardware structure of an electronic device 100.

Hardware structures of the electronic devices 100 shown in FIG. 3 and FIG. 2 are similar, and a difference lies in that an icon display control unit 203 in FIG. 3 is integrated into a system control unit 301. For descriptions of any module in FIG. 3, refer to descriptions of a corresponding module in FIG. 2. Details are not described again.

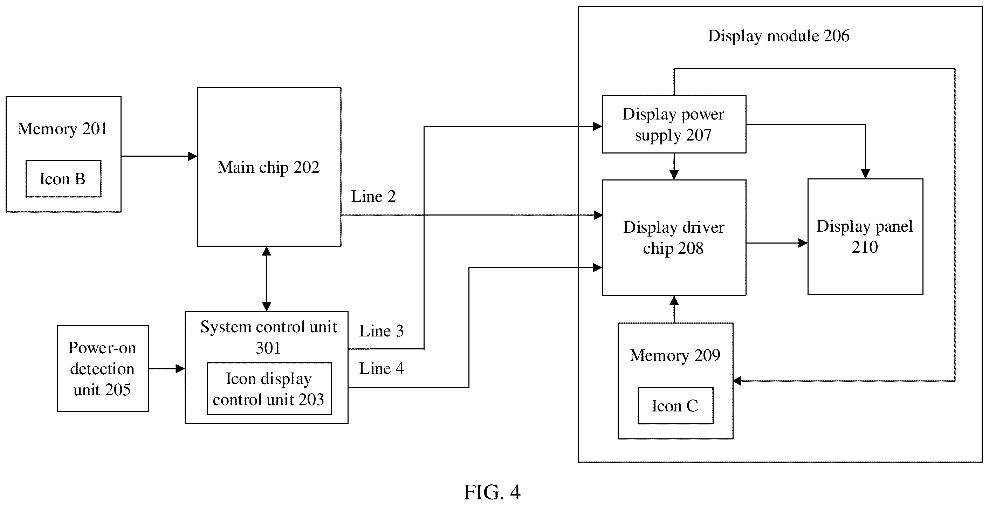

FIG. 4 is a diagram of an example of still another hardware structure of an electronic device 100.

Hardware structures of the electronic devices 100 shown in FIG. 4 and FIG. 3 are similar, and a difference lies in that FIG. 4 does not include the OR gate, the line 1 between the main chip 202 and the OR gate, and the line 5 between the OR gate and the display power supply 207. For descriptions of any module in FIG. 4, refer to descriptions of a corresponding module in FIG. 3. Details are not described again.

This is not limited thereto. In another implementation, a hardware structure of the electronic device 100 is similar to the hardware structure of the electronic device 100 shown in FIG. 4, and a difference lies in that the icon display control unit 203 may not be integrated into the system control unit 301.

In the hardware structures shown in FIG. 2, FIG. 3, and FIG. 4, the system control unit and/or the icon display control unit are/is added to the electronic device. When initialization of the system control unit/icon display control unit is completed, the display module may be powered on and complete initialization, to display an icon. Because time required for initialization of the system control unit/icon display control unit is less than time required for initialization of the main chip, the icon can be displayed before the initialization of the main chip is completed (after the initialization of the system control unit/icon display control unit is completed), without waiting for completion of the initialization of the main chip. In this manner, the initialization of the display module is decoupled from the initialization of the main chip, and time for independent initialization of the system control unit/icon display control unit is shorter, thereby reducing a delay in displaying an icon after power-on, reducing waiting time and anxiety of the user, preventing the user from performing another power-on operation redundantly, and improving user experience.

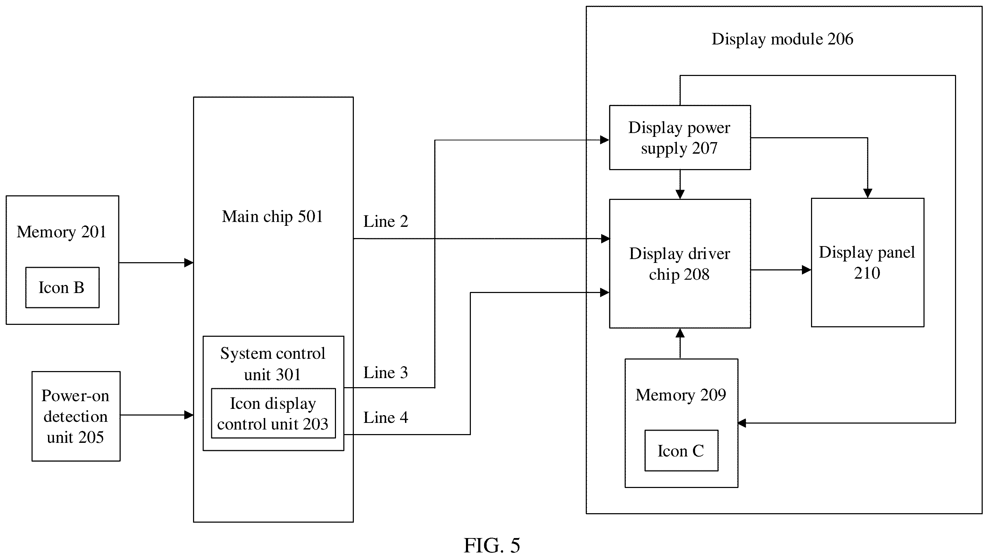

FIG. 5 is a diagram of an example of still yet another hardware structure of an electronic device 100.

Hardware structures of the electronic devices 100 shown in FIG. 5 and FIG. 4 are similar, and a difference lies in that both the system control unit 301 and the icon display control unit 203 in FIG. 5 are integrated into a main chip 501. For descriptions of any module in FIG. 5, refer to descriptions of a corresponding module in FIG. 4. Details are not described again.

In the hardware structure shown in FIG. 5, the electronic device integrates the added system control unit and/or icon display control unit into the main chip. In this way, components of the electronic device are simplified, and costs of the electronic device are reduced. In addition, the system control unit/icon display control unit can perform initialization independently of the main chip. Therefore, the icon can be displayed without waiting for completion of initialization of the main chip, thereby reducing a delay in displaying the icon after power-on, and improving user experience.

The following describes a display method provided in an embodiment of this application.

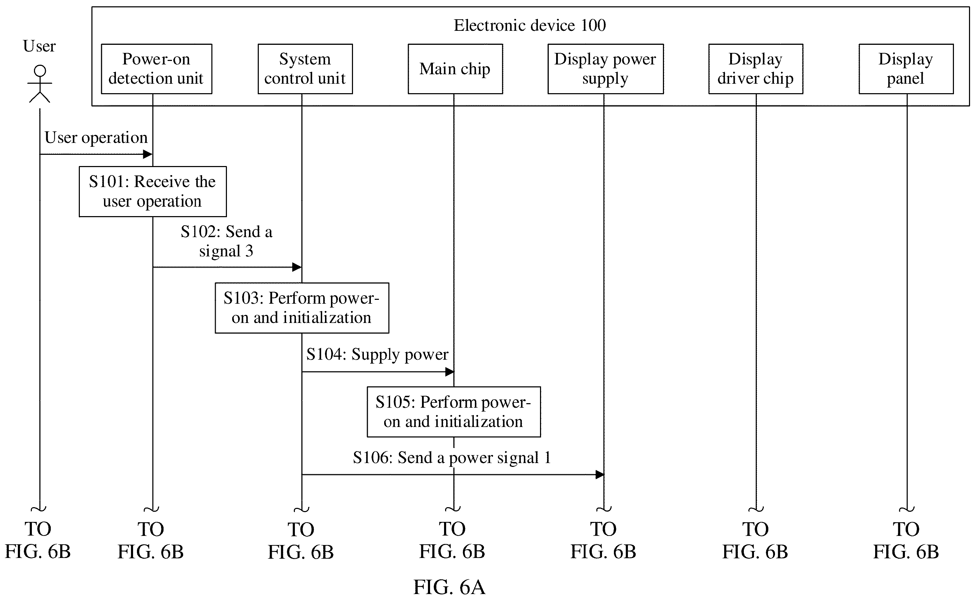

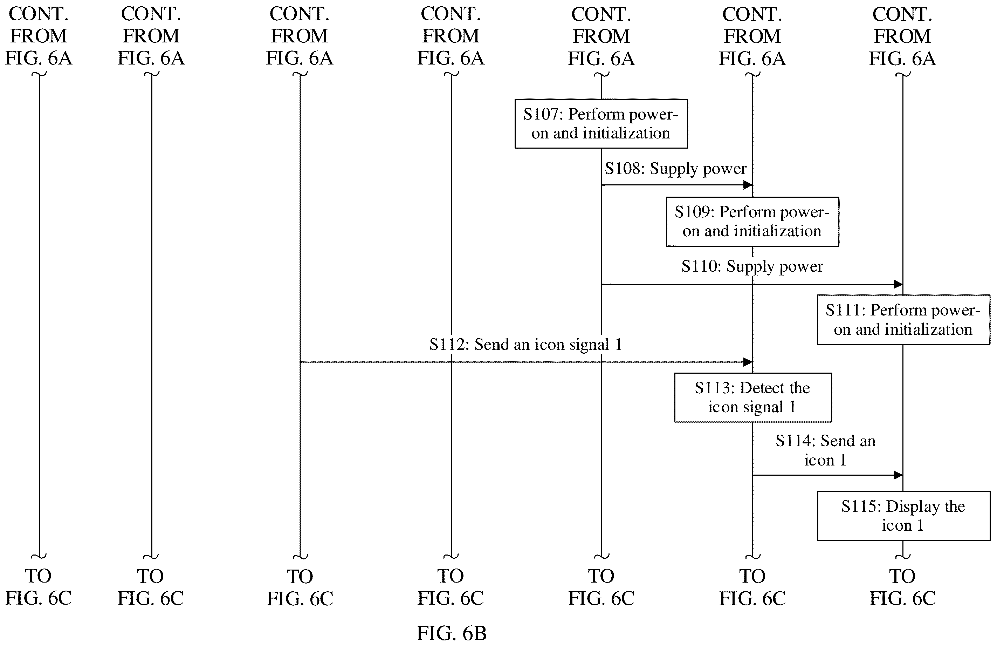

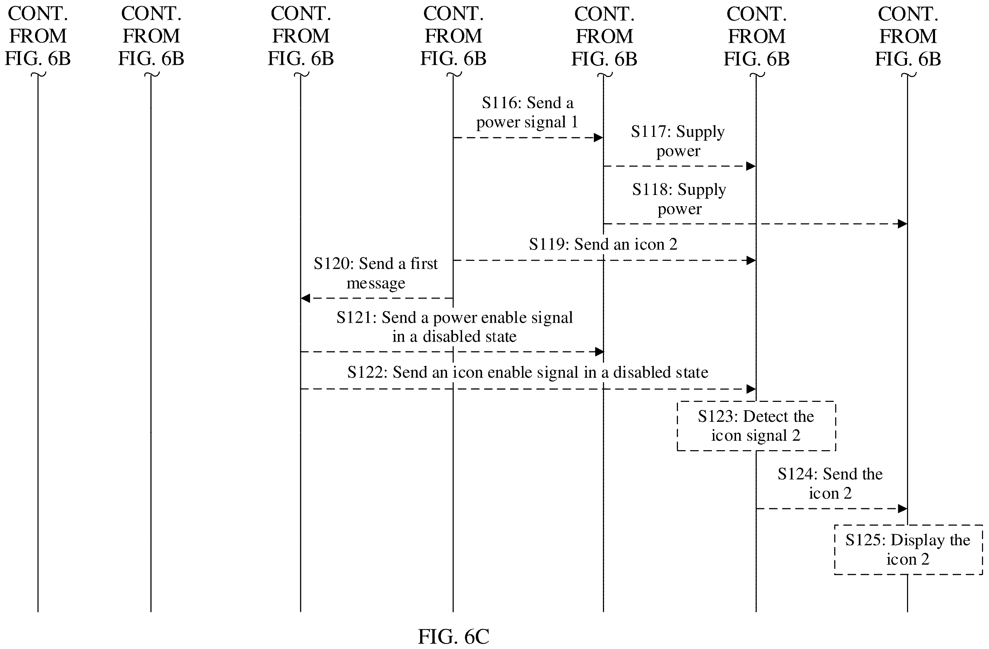

FIG. 6A to FIG. 6C are a schematic flowchart of a display method according to an embodiment of this application. The method may be applied to the hardware structure of the electronic device 100 shown in FIG. 3. The method may include but is not limited to the following steps.

S101: A power-on detection unit receives a user operation.

In an implementation, the user operation may be a power-on operation of a user, the user operation is, for example, a touch operation, and the touch operation is, for example, a pressing operation on a power button. For another example, the user operation is a cover flipping operation for the electronic device 100.

S102: The power-on detection unit sends a signal 3 to a system control unit.

In an implementation, the signal 3 may indicate to power on. In some examples, after receiving the user operation, the power-on detection unit may send the signal 3 to the system control unit in response to the user operation.

S103: The system control unit performs power-on and initialization.

In an implementation, after receiving the signal 3, the system control unit may perform the power-on and initialization.

S104: The system control unit supplies power to a main chip.

In an implementation, after receiving the signal 3, the system control unit may supply power to the main chip.

S105: The main chip performs power-on and initialization.

In an implementation, the main chip may perform the initialization when being powered on.

A sequence of S103 and S104 to S105 is not limited.

S106: The system control unit sends a power signal 1 to a display power supply.

In an implementation, the power signal 1 (a power enable signal in an enabled state) may be used to adjust the display power supply to an enabled state.

In an implementation, after the system control unit is powered on and completes the initialization, the system control unit may send the power signal 1 to the display power supply, so that the display power supply completes initialization, and supplies power to a display driver chip, a display panel, and a memory in a display module.

In an implementation, the power signal 1 is, for example, a high level. In this case, the system control unit may send a high level to the display power supply through a line 3, and a floating level exists between the main chip and the display power supply. The high level and the floating level are still a high level (that is, the power signal 1) after passing through an OR gate.

In an implementation, duration for the initialization of the system control unit is first duration.

A sequence of S104 and S106 is not limited.

S107: The display power supply performs power-on and initialization.

In an implementation, after receiving the power signal 1, the display power supply may perform the power-on and initialization.

S108: The display power supply supplies power to the display driver chip.

In an implementation, after the display power supply is initialized, the display power supply may supply power to the display driver chip. It may be understood that, in this case, the system control unit controls the display power supply to supply power to the display driver chip.

S109: The display driver chip performs power-on and initialization.

In an implementation, the display driver chip may perform the power-on and initialization.

S110: The display power supply supplies power to the display panel.

In an implementation, after the display power supply is initialized, the display power supply may supply power to the display panel. It may be understood that, in this case, the system control unit controls the display power supply to supply power to the display panel.

S111: The display panel performs power-on and initialization.

In an implementation, the display panel may perform the power-on and initialization.

A sequence of S108 to S109 and S110 to S111 is not limited.

S112: The system control unit sends an icon signal 1 to the display driver chip.

In an implementation, the icon signal 1 (an icon enable signal in an enabled state) may be used for the display driver chip to select an icon (for example, an icon 1) stored in the memory of the display module. The icon signal 1 is, for example, a high level, and the system control unit may send the high level to the display driver chip through a line 4.

In an implementation, after the system control unit is powered on and completes the initialization, the system control unit may send the icon signal 1 to the display driver chip.

A sequence of S106 to S111 and S112 is not limited.

S113: The display driver chip detects the icon signal 1.

In an implementation, after the display driver chip is powered on and completes the initialization, the display driver chip may detect the icon signal 1, and determine that a current icon enable signal is in an enabled state.

S114: The display driver chip sends the icon 1 to the display panel.

In an implementation, the icon 1 may be an icon stored in the memory of the display module, for example, the icon C in the memory 209 shown in FIG. 3, and the icon 1 is, for example, a trademark icon.

In an implementation, when detecting that the current icon enable signal is in the enabled state, the display driver chip may obtain the icon 1 from the memory of the display module, and send the icon 1 to the display panel.

S115: The display panel displays the icon 1.

In an implementation, after receiving the icon 1 sent by the display driver chip, the display panel may display the icon 1.

S116: The main chip sends a power signal 1 to the display power supply.

In an implementation, S116 is an optional step.

In an implementation, for descriptions of the power signal 1, refer to descriptions of the power signal 1 in S106 in FIG. 6A to FIG. 6C. Details are not described again.

In an implementation, after the main chip is powered on and completes the initialization, the main chip may send the power signal 1 to the display power supply, so that the display power supply supplies power to the display driver chip, the display panel, and the memory of the display module.

In an implementation, the power signal 1 is, for example, a high level. In this case, the main chip may send a high level to the display power supply through a line 1, and the system control unit may send a high level to the display power supply through the line 3. The two high levels are still a high level (the power signal 1) after passing through the OR gate.

In an implementation, duration for the initialization of the main chip is second duration, and the second duration is greater than the first duration (the duration for the initialization of the system control unit). Optionally, the second duration may be further greater than third duration, and the third duration may be a sum of the first duration and duration for initialization of the display module (including the display power supply, the display driver chip, the display panel, and the memory).

S117: The display power supply supplies power to the display driver chip.

In an implementation, S117 is an optional step.

It may be understood that, in this case, both the main chip and the system control unit control the display power supply to supply power to the display driver chip.

S118: The display power supply supplies power to the display panel.

In an implementation, S118 is an optional step.

It may be understood that, in this case, both the main chip and the system control unit control the display power supply to supply power to the display panel.

S119: The main chip sends an icon 2 to the display driver chip.

In an implementation, S119 is an optional step.

In an implementation, the icon 2 may be an icon stored in a memory of the main chip, for example, the icon B in the memory 201 shown in FIG. 3, and the icon 2 is, for example, an operating system (Operating System, OS) icon.

In an implementation, after the main chip is powered on and completes the initialization, the icon 2 may be obtained from the memory of the main chip, and the icon 2 is sent to the display driver chip through a line 2 (for example, a video protocol transmission bus), where the video protocol transmission bus is, for example, but is not limited to, an eDP interface or an MIPI interface.

S120: The main chip sends a first message to the system control unit.

In an implementation, S120 is an optional step.

In an implementation, the first message may indicate that the main chip has sent the icon 2 to the display driver chip.

S121: The system control unit sends a power enable signal in a disabled state to the display power supply.

In an implementation, S121 is an optional step.

In an implementation, the power enable signal (which may be referred to as a power signal 2) in the disabled state may be used to adjust the display power supply to a disabled state. The power signal 2 and the power signal 1 are different, for example, of different high and low levels.

In an implementation, after receiving the first message, the system control unit may send the power signal 2 to the display power supply. It may be understood that the system control unit switches the power enable signal from the enabled state to the disabled state.

In an implementation, the power signal 2 is, for example, a low level. In this case, the system control unit may send a low level to the display power supply through the line 3, and the main chip may send a high level to the display power supply through the line 1. The high level and the low level are still a high level (the power signal 1) after passing through the OR gate. It may be understood that, in this case, the system control unit no longer controls the display power supply to supply power to the display driver chip, the display panel, and the memory in the display module, and only the main chip controls the display power supply to supply power to the display driver chip, the display panel, and the memory.

S122: The system control unit sends an icon enable signal in a disabled state to the display driver chip.

In an implementation, S122 is an optional step.

In an implementation, the icon enable signal (which may be referred to as an icon signal 2) in the disabled state may be used for the display driver chip to select an icon (for example, the icon 2) stored in the memory of the main chip. The icon signal 2 is different from the icon signal 1, for example, of different high and low levels. The icon signal 2 is, for example, a low level. The system control unit may send a low level to the display driver chip through the line 4.

In an implementation, after receiving the first message, the system control unit may send the icon signal 2 to the display driver chip. It may be understood that the system control unit switches the icon enable signal from the enabled state to the disabled state.

A sequence of S120 and S121 is not limited.

S123: The display driver chip detects the icon signal 2.

In an implementation, S123 is an optional step.

In an implementation, the display driver chip may detect the icon signal 2, and determine that a current icon enable signal is in a disabled state.

S124: The display driver chip sends the icon 2 to the display panel.

In an implementation, S124 is an optional step.

In an implementation, when detecting that the current icon enable signal is in the disabled state, the display driver chip may send, to the display panel, the icon 2 obtained from the main chip.

S125: The display panel displays the icon 2.

In an implementation, S125 is an optional step.

In an implementation, after receiving the icon 2 sent by the display driver chip, the display panel may display the icon 2. It may be understood that the display panel switches the displayed icon 1 to the icon 2.

In the method shown in FIG. 6A to FIG. 6C, switching between the icon 1 and the icon 2 can be flexibly controlled by controlling different states (the enabled state and the disabled state) of the icon enable signals. A delay in switching between the two states of the icon enable signals is relatively low. Therefore, a rate of switching between the icon 1 and the icon 2 is relatively high, and the user is unaware of the switching, thereby further improving user experience.

The foregoing implementations are described by using the hardware structure of the electronic device 100 shown in FIG. 3 as an example. In another implementation, the hardware structure of the electronic device 100 shown in FIG. 2 may be further used as an example for description. Steps in implementations based on the hardware structure shown in FIG. 2 are similar to steps in implementations shown in FIG. 6A to FIG. 6C. A difference lies in that the system control unit may supply power to the icon display control unit and the main chip, so that the icon display control unit and the main chip perform separate power-on and initialization, and the icon display control unit interacts with the display module subsequently, so that the display panel displays the icon 2.

The foregoing implementations are described by using the hardware structure of the electronic device 100 shown in FIG. 3 as an example. In another implementation, the hardware structure of the electronic device 100 shown in FIG. 4 may be further used as an example for description. Steps in implementations based on the hardware structure shown in FIG. 4 are similar to steps in implementations shown in FIG. 6A to FIG. 6C. A difference lies in that the implementations shown in FIG. 4 do not include S115 to S117 and S120 in FIG. 6A to FIG. 6C. In other words, only the system control unit controls the display power supply to supply power to the display driver chip, the display panel, and the memory in the display module. In this manner, components (an OR gate, a line 1, and a line 5) of the electronic device can be simplified, costs of the electronic device can be reduced, time for interaction between internal modules of the electronic device can be reduced, a delay in displaying an icon after power-on can be further reduced, and user experience can be improved.

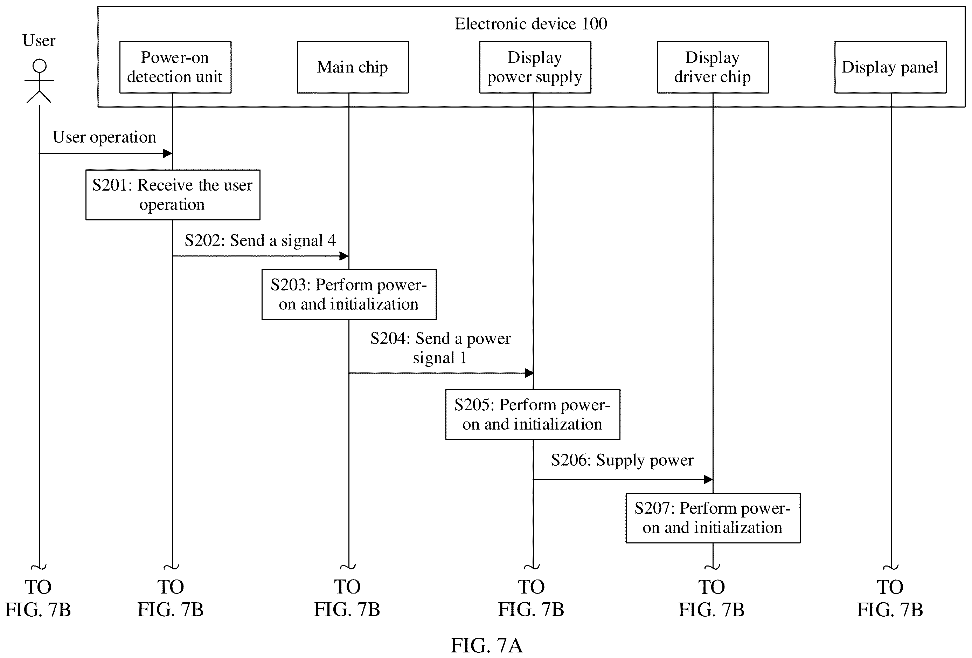

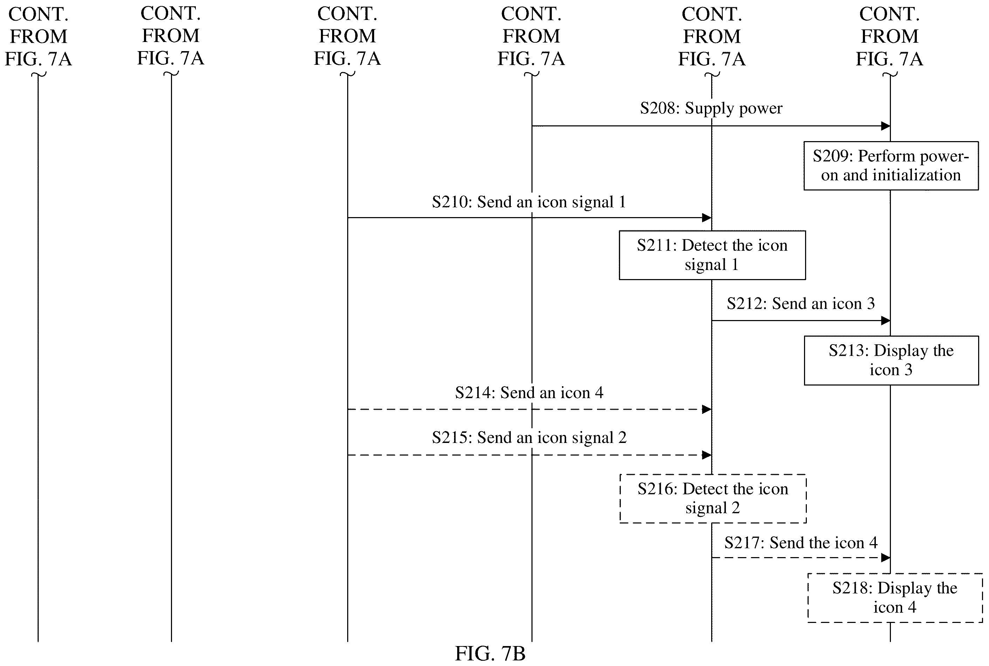

FIG. 7A and FIG. 7B are a schematic flowchart of another display method according to an embodiment of this application. The method may be applied to the hardware structure of the electronic device 100 shown in FIG. 5. The method may include but is not limited to the following steps.

S201: A power-on detection unit receives a user operation.

In an implementation, for descriptions of S201, refer to descriptions of S101 in FIG. 6A to FIG. 6C. Details are not described again.

S202: The power-on detection unit sends a signal 4 to a main chip.

In an implementation, the signal 4 may indicate to power on. For descriptions of S202, refer to descriptions of S202 in FIG. 6A to FIG. 6C. Details are not described again.

S203: The main chip performs power-on and initialization.

In an implementation, the main chip may include a system control unit. After the main chip receives a signal 4, the main chip and the system control unit in the main chip may perform the power-on and initialization.

In an implementation, the system control unit may be independently initialized, that is, the initialization of the system control unit and the initialization of the main chip are separated.

S204: The main chip sends a power signal 1 to a display power supply.

In an implementation, for descriptions of the power signal 1, refer to descriptions of the power signal 1 in S106 in FIG. 6A to FIG. 6C. Details are not described again.

In an implementation, after the system control unit in the main chip is powered on and completes the initialization (in this case, power-on and initialization of another module different from the system control unit in the main chip are not completed), the system control unit may send the power signal 1 to the display power supply, so that the display power supply completes initialization, and supplies power to a display driver chip, a display panel, and a memory in a display module.

In an implementation, duration for the initialization of the system control unit in the main chip is fourth duration, duration for the initialization of the another module in the main chip is fifth duration, and the fourth duration is less than the fifth duration.

S205: The display power supply performs power-on and initialization.

In an implementation, after receiving the power signal 1, the display power supply may perform the power-on and initialization.

S206: The display power supply supplies power to the display driver chip.

S207: The display driver chip performs power-on and initialization.

S208: The display power supply supplies power to the display panel.

S209: The display panel performs power-on and initialization.

A sequence of S206 to S207 and S208 to S209 is not limited.

S210: The main chip sends an icon signal 1 to the display driver chip.

In an implementation, for descriptions of the icon signal 1, refer to descriptions of the icon signal 1 in S112 in FIG. 6A to FIG. 6C. Details are not described again.

In an implementation, after the system control unit in the main chip is powered on and completes the initialization (in this case, power-on and initialization of the another module in the main chip are not completed), the system control unit may send the icon signal 1 to the display driver chip.

In an implementation, a sequence of S204 to S209 and S210 is not limited.

S211: The display driver chip detects the icon signal 1.

In an implementation, for descriptions of S211, refer to descriptions of S113 in FIG. 6A to FIG. 6C. Details are not described again.

S212: The display driver chip sends an icon 3 to the display panel.

In an implementation, for descriptions of S212, refer to descriptions of S114 in FIG. 6A to FIG. 6C. Details are not described again.

S213: The display panel displays the icon 3.

In an implementation, the icon 3 may be an icon stored in the memory of the display module, for example, the icon C in the memory 209 shown in FIG. 5, and the icon 3 is, for example, a trademark icon.

In an implementation, for descriptions of S213, refer to descriptions of S115 in FIG. 6A to FIG. 6C. Details are not described again.

S214: The main chip sends an icon 4 to the display driver chip.

In an implementation, S214 is an optional step.

In an implementation, the icon 4 may be an icon stored in a memory of the main chip, for example, the icon B in the memory 201 shown in FIG. 5, and the icon 4 is, for example, an OS icon.

In an implementation, for descriptions of S214, refer to descriptions of S119 in FIG. 6A to FIG. 6C. Details are not described again.

S215: The main chip sends an icon signal 2 to the display driver chip.

In an implementation, S215 is an optional step.

In an implementation, after the main chip sends the icon 4 to the display driver chip, the system control unit in the main chip may send the icon signal 2 to the display driver chip. It may be understood that the system control unit switches an icon enable signal from an enabled state to a disabled state.

S216: The display driver chip detects the icon signal 2.

In an implementation, S216 is an optional step.

In an implementation, for descriptions of S216, refer to descriptions of S123 in FIG. 6A to FIG. 6C. Details are not described again.

S217: The display driver chip sends the icon 4 to the display panel.

In an implementation, S217 is an optional step.

In an implementation, for descriptions of S217, refer to descriptions of S124 in FIG. 6A to FIG. 6C. Details are not described again.

S218: The display panel displays the icon 4.

In an implementation, S218 is an optional step.

In an implementation, for descriptions of S218, refer to descriptions of S125 in FIG. 6A to FIG. 6C. Details are not described again.

In the method shown in FIG. 7A and FIG. 7B, the electronic device integrates the added system control unit into the main chip. In this way, components of the electronic device are simplified, costs of the electronic device are reduced, time for interaction between the main chip and the system control unit is reduced, a delay in displaying an icon after power-on is further reduced, and user experience is improved.

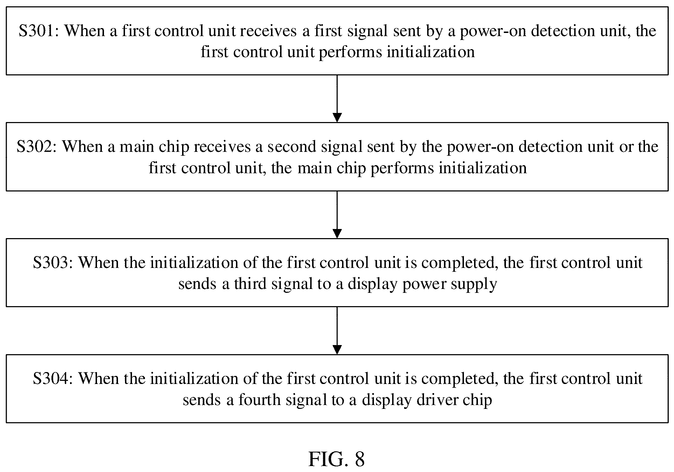

FIG. 8 is a schematic flowchart of still another display method according to an embodiment of this application. The method may be applied to the hardware structure of the electronic device 100 shown in FIG. 2. The method may be applied to the hardware structure of the electronic device 100 shown in FIG. 3. The method may be applied to the hardware structure of the electronic device 100 shown in FIG. 4. The method may be applied to the hardware structure of the electronic device 100 shown in FIG. 5. The method may include but is not limited to the following steps.

S301: When a first control unit receives a first signal sent by a power-on detection unit, the first control unit performs initialization.

In an implementation, the first signal may indicate the electronic device to start power-on. For descriptions of the first signal, refer to descriptions of the signal 3 in S102 in FIG. 6A to FIG. 6C. Details are not described again.

In an implementation, the first control unit is, for example, the system control unit 301 shown in FIG. 3, FIG. 4, and FIG. 5. For descriptions of the first control unit, refer to descriptions of the system control unit in S103 in FIG. 6A to FIG. 6C. Details are not described again. In another implementation, the first control unit includes, for example, the system control unit 204 and the icon display control unit 203 shown in FIG. 2. For specific descriptions, refer to the following descriptions in S302. Details are not described temporarily.

In an implementation, for descriptions of S301, refer to descriptions of S101 to S103 in FIG. 6A to FIG. 6C. Details are not described again.

S302: When a main chip receives a second signal sent by the power-on detection unit or the first control unit, the main chip performs initialization.

In an implementation, when the first control unit receives the first signal sent by the power-on detection unit, the first control unit may send the second signal to the main chip, and when the main chip receives the second signal sent by the first control unit, the main chip may perform the initialization.

In an implementation, first duration for the initialization of the first control unit is less than second duration for the initialization of the main chip.

In an implementation, for descriptions of S302, refer to descriptions of S104 and S 105 in FIG. 6A to FIG. 6C. Details are not described again.

In an implementation, the first control unit may include a system control unit and an icon display control unit, for example, include the system control unit 204 and the icon display control unit 203 shown in FIG. 2. When the system control unit receives the first signal sent by the power-on detection unit, the system control unit may send the second signal to the main chip, and send an enable signal to the icon display control unit. When the icon display control unit receives the enable signal, the icon display control unit may perform initialization. When the main chip receives the second signal sent by the system control unit, the main chip may perform the initialization. Duration for the initialization of the icon display control unit is less than the second duration for the initialization of the main chip.

In an implementation, the system control unit and the icon display control unit may be integrated as a whole.

S303: When the initialization of the first control unit is completed, the first control unit sends a third signal to a display power supply.

In an implementation, the third signal may be used to enable the display power supply. For specific descriptions, refer to S106 to S111 in FIG. 6A to FIG. 6C. For descriptions of the third signal, refer to descriptions of the power signal 1 in S106 in FIG. 6A to FIG. 6C. Details are not described again.

In an implementation, when the first control unit completes the initialization, the first control unit sends the third signal to an OR gate, and the OR gate sends the received third signal to the display power supply.

In an implementation, for descriptions of S303, refer to descriptions of S106 in FIG. 6A to FIG. 6C. Details are not described again.

A sequence of S303 and S304 is not limited.

S304: When the initialization of the first control unit is completed, the first control unit sends a fourth signal to a display driver chip.

In an implementation, the fourth signal may be used to trigger a display panel to display a first icon. For specific descriptions, refer to descriptions of S112 to S115 in FIG. 6A to FIG. 6C. For descriptions of the fourth signal, refer to descriptions of the icon signal 1 in S112 in FIG. 6A to FIG. 6C. Details are not described again.

In an implementation, the first icon may be an icon stored in a display module. For descriptions of the first icon, refer to descriptions of the icon 1 in S114 in FIG. 6A to FIG. 6C. Details are not described again.

In an implementation, after S304, when the initialization of the main chip is completed, the main chip may send a second icon to the display driver chip, the main chip may send a first message to the first control unit, and the first control unit may send a fifth signal to the display driver chip based on the first message, where the second icon is an icon stored in a memory of the main chip. For descriptions of the second icon, refer to descriptions of the icon 2 in S119 in FIG. 6A to FIG. 6C. The first message indicates that the main chip has sent the second icon to the display driver chip, the fifth signal is used to trigger the display panel to display the second icon. For specific descriptions, refer to descriptions of S119, S120, and S123 to S125 in FIG. 6A to FIG. 6C. Details are not described again.

In an implementation, after S304, when the initialization of the main chip is completed, the main chip may send a sixth signal to the OR gate, the first control unit may send a seventh signal to the OR gate based on the first message, and the OR gate sends an eighth signal to the display power supply based on the sixth signal and the seventh signal, where the sixth signal is used to enable the display power supply, the seventh signal is used to disable the display power supply, the eighth signal is a signal obtained through an OR operation performed on the sixth signal and the seventh signal, and the eighth signal is used to enable the display power supply. For specific descriptions, refer to descriptions of S116 to S 118 and S120 to S122 in FIG. 6A to FIG. 6C. Details are not described again.

In an implementation, the fourth signal is different from the fifth signal, the fourth signal is a signal in a first state, the fifth signal is a signal in a second state, the first state and the second state are different states of signals used to trigger display of icons, the first state is, for example, an enabled state, and the second state is, for example, a disabled state. For descriptions of the fourth signal, refer to descriptions of the icon signal 1 in S112 in FIG. 6A to FIG. 6C. For descriptions of the fifth signal, refer to descriptions of the icon signal 2 in S122 in FIG. 6A to FIG. 6C. Details are not described again.

In an implementation, the sixth signal is different from the seventh signal, the sixth signal is a signal in a third state, the seventh signal is a signal in a fourth state, the third state and the fourth state are different states of signals used to enable the display power supply, the third state is, for example, an enabled state, and the fourth state is, for example, a disabled state. For descriptions of the sixth signal, refer to descriptions of the power signal 1 in S106 in FIG. 6A to FIG. 6C. For descriptions of the seventh signal, refer to descriptions of the power signal 2 in S121 in FIG. 6A to FIG. 6C. Details are not described again.

In an implementation, the second duration for the initialization of the main chip is greater than third duration, and the third duration is a sum of duration for initialization of the display module and the first duration. For specific descriptions, refer to descriptions of S116 in FIG. 6A to FIG. 6C. Details are not described again.

In the method shown in FIG. 8, the first control unit is added to the electronic device. When the initialization of the first control unit is completed, the display module may be powered on and complete initialization, to display an icon. Because time required for the initialization of the first control unit is less than time required for the initialization of the main chip, the icon can be displayed before the initialization of the main chip is completed (after the initialization of the first control unit is completed), without waiting for completion of the initialization of the main chip. In this manner, the initialization of the display module is decoupled from the initialization of the main chip, and time for independent initialization of the first control unit is shorter, thereby reducing a delay in displaying an icon after power-on, reducing waiting time and anxiety of a user, preventing the user from performing another power-on operation redundantly, and improving user experience.

## Claims

1. An electronic device, comprising a power-on detection unit, a main chip, a first control unit, and a display module, wherein the display module comprises a display power supply, a display driver chip, and a display panel, wherein
the first control unit is configured to perform initialization when receiving a first signal sent by the power-on detection unit, wherein the first signal indicates the electronic device to power on;
the main chip is configured to perform initialization when receiving a second signal sent by the power-on detection unit or the first control unit;
the first control unit is configured to send a third signal to the display power supply when the initialization is completed, wherein the third signal is used to enable the display power supply; and
the first control unit is configured to send a fourth signal to the display driver chip when the initialization is completed, wherein the fourth signal is used to trigger the display panel to display a first icon, and the first icon is an icon stored in the display module.

2. The electronic device according to claim 1, wherein first duration for the initialization of the first control unit is less than second duration for the initialization of the main chip.

3. The electronic device according to claim 1 or 2, wherein the first control unit is configured to send the second signal to the main chip when receiving the first signal sent by the power-on detection unit; and
the main chip is configured to perform the initialization when receiving the second signal sent by the first control unit.

4. The electronic device according to claim 1 or 2, wherein the first control unit comprises a system control unit and an icon display control unit, and the system control unit is configured to: when receiving the first signal sent by the power-on detection unit, send an enable signal to the icon display control unit, and send the second signal to the main chip;
the icon display control unit is configured to perform initialization when receiving the enable signal, wherein duration for the initialization of the icon display control unit is less than the second duration for the initialization of the main chip; and
the main chip is configured to perform the initialization when receiving the second signal sent by the system control unit.

5. The electronic device according to claim 4, wherein the system control unit and the icon display control unit are integrated as a whole.

6. The electronic device according to any one of claims 1 to 5, wherein the electronic device comprises an OR gate, the first control unit, the main chip, and the display power supply are connected through the OR gate, and the first control unit is configured to send the third signal to the OR gate when the initialization is completed; and
the OR gate is configured to send the received third signal to the display power supply.

7. The electronic device according to any one of claims 1 to 6, wherein the main chip is configured to send a second icon to the display driver chip when the initialization is completed, wherein the second icon is an icon stored in a memory of the main chip;
the main chip is configured to send a first message to the first control unit, wherein the first message indicates that the main chip sends the second icon to the display driver chip; and
the first control unit is configured to send a fifth signal to the display driver chip based on the first message, wherein the fifth signal is used to trigger the display panel to display the second icon.

8. The electronic device according to claim 7, wherein the electronic device comprises the OR gate, the first control unit, the main chip, and the display power supply are connected through the OR gate, and the main chip is configured to send a sixth signal to the OR gate when the initialization is completed, wherein the sixth signal is used to enable the display power supply;
the first control unit is configured to send a seventh signal to the OR gate based on the first message, wherein the seventh signal is used to disable the display power supply; and
the OR gate is configured to send an eighth signal to the display power supply based on the sixth signal and the seventh signal, wherein the eighth signal is a signal obtained through an OR operation performed on the sixth signal and the seventh signal, and the eighth signal is used to enable the display power supply.

9. The electronic device according to claim 7 or 8, wherein the fourth signal is different from the fifth signal, the fourth signal is a signal in a first state, the fifth signal is a signal in a second state, and the first state and the second state are different states of signals used to trigger display of icons.

10. The electronic device according to claim 8, wherein the sixth signal is different from the seventh signal, the sixth signal is a signal in a third state, the seventh signal is a signal in a fourth state, and the third state and the fourth state are different states of signals used to enable the display power supply.

11. The electronic device according to any one of claims 1 to 10, wherein the second duration for the initialization of the main chip is greater than third duration, and the third duration is a sum of duration for initialization of the display module and the first duration for the initialization of the first control unit.

12. A display method, applied to an electronic device, wherein the electronic device comprises a power-on detection unit, a main chip, a first control unit, and a display module, the display module comprises a display power supply, a display driver chip, and a display panel, and the method comprises:
performing, by the first control unit, initialization when the first control unit receives a first signal sent by the power-on detection unit, wherein the first signal indicates the electronic device to power on;
performing, by the main chip, initialization when the main chip receives a second signal sent by the power-on detection unit or the first control unit;
sending, by the first control unit, a third signal to the display power supply when the initialization of the first control unit is completed, wherein the third signal is used to enable the display power supply; and
sending, by the first control unit, a fourth signal to the display driver chip when the initialization of the first control unit is completed, wherein the fourth signal is used to trigger the display panel to display a first icon, and the first icon is an icon stored in the display module.

13. The method according to claim 12, wherein first duration for the initialization of the first control unit is less than second duration for the initialization of the main chip.

14. The method according to claim 12 or 13, wherein the method further comprises:
sending, by the first control unit, the second signal to the main chip when the first control unit receives the first signal sent by the power-on detection unit; and
performing, by the main chip, the initialization when the main chip receives the second signal sent by the first control unit.

15. The method according to claim 12 or 13, wherein the first control unit comprises a system control unit and an icon display control unit, and the method further comprises:
when the system control unit receives the first signal sent by the power-on detection unit, sending, by the system control unit, an enable signal to the icon display control unit, and sending, by the system control unit, the second signal to the main chip;
performing, by the icon display control unit, initialization when the icon display control unit receives the enable signal, wherein duration for the initialization of the icon display control unit is less than the second duration for the initialization of the main chip; and
performing, by the main chip, the initialization when the main chip receives the second signal sent by the system control unit.

16. The method according to claim 15, wherein the system control unit and the icon display control unit are integrated as a whole.

17. The method according to any one of claims 12 to 16, wherein the electronic device comprises an OR gate, the first control unit, the main chip, and the display power supply are connected through the OR gate, and the method further comprises:
sending, by the first control unit, the third signal to the OR gate when the initialization of the first control unit is completed; and
sending, by the OR gate, the received third signal to the display power supply.

18. The method according to any one of claims 12 to 17, wherein the method further comprises:
sending, by the main chip, a second icon to the display driver chip when the initialization of the main chip is completed, wherein the second icon is an icon stored in a memory of the main chip;
sending, by the main chip, a first message to the first control unit, wherein the first message indicates that the main chip sends the second icon to the display driver chip; and
sending, by the first control unit, a fifth signal to the display driver chip based on the first message, wherein the fifth signal is used to trigger the display panel to display the second icon.

19. The method according to claim 18, wherein the electronic device comprises the OR gate, the first control unit, the main chip, and the display power supply are connected through the OR gate, and the method further comprises:
sending, by the main chip, a sixth signal to the OR gate when the initialization of the main chip is completed, wherein the sixth signal is used to enable the display power supply;
sending, by the first control unit, a seventh signal to the OR gate based on the first message, wherein the seventh signal is used to disable the display power supply; and
sending, by the OR gate, an eighth signal to the display power supply based on the sixth signal and the seventh signal, wherein the eighth signal is a signal obtained through an OR operation performed on the sixth signal and the seventh signal, and the eighth signal is used to enable the display power supply.

20. The method according to claim 18 or 19, wherein the fourth signal is different from the fifth signal, the fourth signal is a signal in a first state, the fifth signal is a signal in a second state, and the first state and the second state are different states of signals used to trigger display of icons.

21. The method according to claim 19, wherein the sixth signal is different from the seventh signal, the sixth signal is a signal in a third state, the seventh signal is a signal in a fourth state, and the third state and the fourth state are different states of signals used to enable the display power supply.

22. The method according to any one of claims 12 to 21, wherein the second duration for the initialization of the main chip is greater than third duration, and the third duration is a sum of duration for initialization of the display module and the first duration for the initialization of the first control unit.

23. An electronic device, comprising a transceiver, a processor, and a memory, wherein the memory is configured to store a computer program, and the processor invokes the computer program to perform the method according to any one of claims 12 to 22.

24. A computer storage medium, wherein the computer storage medium stores a computer program, and when the computer program is executed by a processor, the method according to any one of claims 12 to 22 is implemented.
